# EUROPÄISCHE PATENTSCHRIFT

(11) **EP 3 469 581 B1**
(45) Veröffentlichungstag und Bekanntmachung des Hinweises auf die Patenterteilung: **10.07.2019**
(21) Anmeldenummer: 17826144.2
(22) Anmeldetag: 28.11.2017
(51) Int. Cl.: G10L 15/00, G10L 15/22, G10L 13/00

(54) **VERFAHREN ZUM BETREIBEN EINES KRAFTFAHRZEUGS MIT EINER BEDIENVORRICHTUNG**
METHOD FOR OPERATING A MOTOR VEHICLE WITH AN OPERATING DEVICE
PROCÉDÉ PERMETTANT DE FAIRE FONCTIONNER UN VÉHICULE AUTOMOBILE À L'AIDE D'UN DISPOSITIF DE COMMANDE

(30) Priorität: 23.01.2017 DE 102017200976
(43) Veröffentlichungstag der Anmeldung: 17.04.2019
(73) Patentinhaber: Audi AG, 85045 Ingolstadt (DE)
(72) Erfinder: AL HADDAD, Christian, 85049 Ingolstadt (DE); MAIWALD, Stefan, 85055 Ingolstadt (DE)
(86) Internationale Anmeldenummer: PCT/EP2017/080590
(87) Internationale Veröffentlichungsnummer: WO 2018/133981

(56) Entgegenhaltungen:
- WO-A1-2012/011885
- DE-T2- 60 109 979
- US-A1- 2008 162 146

## Beschreibung

Die Erfindung betrifft ein Verfahren zum Betreiben eines Kraftfahrzeugs, das eine Bedienvorrichtung aufweist. Die Bedienvorrichtung ist in einem ersten Betriebsmodus dazu eingerichtet, in einer ersten, voreingestellten Bediensprache benutzt zu werden, und in einem zweiten Betriebsmodus ist die Bedienvorrichtung zu eingerichtet, in einer zweiten Bediensprache benutzt zu werden.

In Kraftfahrzeugen wird das Augenmerk verstärkt auf eine umfassende Komfortelektronik gelegt, durch die Komfortsysteme, wie zum Beispiel ein Navigationsgerät, eine Standheizung, oder eine Klimaanlage elektrisch bedient werden können. Um einen Benutzer des Kraftfahrzeugs die Bedienung sowohl der Komfortelektronik, als auch des eigentlichen Antriebs des Kraftfahrzeugs, zu ermöglichen, muss eine entsprechende Bedienvorrichtung, also ein Gerät oder eine Gerätekomponente, das oder die als Benutzerschnittstelle zwischen dem Benutzer und dem zu bedienenden System dient, bereitgestellt werden. Eine solche Bedienvorrichtung kann beispielsweise als Multimedia-Interface ("MMI") oder Infotainmentsystem ausgestaltet sein, und beispielsweise einen Berührungssensitiven Bildschirm und/oder Taster aufweisen. Die Bedienvorrichtung kann in verschiedenen Bediensprachen betrieben werden, d.h. es können mehrere Sprachen gespeichert sein, in denen ein Text zu zum Beispiel Erläutern einer Funktion eines Menüpunkts ausgegeben wird. In konventionellen Bedienvorrichtungen kann der Benutzer beispielsweise in einem Sprachmenü eine entsprechende Bediensprache auswählen.

Um den Benutzer möglichst wenig von einem Fahrgeschehen abzulenken, kann die Bedienvorrichtung außerdem Informationen, beispielsweise Navigationshinweise, über einen Lautsprecher ausgegeben. Um eine Sprachausgabe bzw. eine Spracherkennung in einer gewünschten oder in einer Muttersprache zu ändern, muss der Benutzer jedoch wieder durch ein schriftliches Menü navigieren.

Mit der verbalen Sprache der Bedienvorrichtung wird jedoch auch in die geschriebene Sprache umgestellt, also auch die Sprache der Menüs zur Sprachumstellung. Folglich kann zum Beispiel einem Engländer in einem Menü auf Deutsch die Option "Sprache Auswählen" angeboten werden, falls er jedoch kein Deutsch spricht, kann er das Menü nicht verstehen. Noch schwieriger wird es, wenn die Schrift fremd ist, zum Beispiel arabische Schriftzeichen für einen deutschen Benutzer oder lateinische Buchstaben für einen arabischen Benutzer. Außerdem erfordert die Umstellung über das Schriftmenü Zeit, ist lästig, und möglicherweise stellt der Benutzer erst während einer Fahrt fest, dass eine Sprache eingestellt ist, die er nicht versteht. Daraus ergibt sich nicht nur eine Benutzerunzufriedenheit, sondern auch eine unnötige Ablenkung.

Die DE 601 09 979 T2 beschreibt eine Navigationseinrichtung mit einer Führungssprache, welche einer verwendeten Sprache entspricht. Eine Spracherkennungs- und Sprachbestimmungseinrichtung untersuchen eine Spracheingabe eines Benutzers, wobei entsprechend anhand von jedem in der Spracheingabe enthaltenen Wort die Sprache als verwendete Sprache bestimmt wird.

Aus der WO 2015/185464 A1 ist ein Assistenzsystem bekannt, dass mittels Spracheingabe steuerbar ist. Eine Spracherkennungs- und Sprachbestimmungseinrichtung ordnet Spracheingaben gemäß bestimmten Systemen und Regeln eine Bedeutung zu.

Die US 2008/162146 A1 beschreibt ein Verfahren zur Klassifizierung von mindestens zwei Sprachen in einem automatischen Dialogsystem, das digitalisierte Spracheingaben verarbeitet. Dabei erfolgt die Anwendung mindestens eines Spracherkennungsverfahrens und mindestens eines Sprachenklassifizierungsverfahrens auf die digitale Spracheingabe, um durch logische Auswertung der Ergebnisse die Sprache der Spracheingabe zu identifizieren.

Bei diesen Verfahren wird der Benutzer jedoch nicht dabei unterstützt, sich durch einen Bedienmenü zu wählen, um eine bevorzugte Sprache einzustellen. Selbst wenn die Bedienvorrichtung erkennt, welche Sprache er gerade spricht, muss er die von ihm gewünschte Sprache auswählen, in dem er durch das Bedienmenü der Bedienvorrichtung navigiert.

Eine der Erfindung zu Grunde liegende Aufgabe ist das Unterstützen des Benutzers des Kraftfahrzeugs beim schnellen Auswählen oder Ändern der Bediensprache.

Die gestellte Aufgabe wird von dem erfindungsgemäßen Verfahren und den erfindungsgemäßen Vorrichtungen gemäß der neben geordneten Patentansprüche gelöst. Weitere vorteilhafte Weiterbildungen sind durch die Unteransprüche gegeben.

Der Erfindung liegt die Idee zugrunde, nach einer Bestimmung der von dem Benutzer gesprochenen Sprache in der bestimmten Sprache, also in der Sprache, in der der Benutzer gesprochen hat, bestätigen zu lassen, dass er die Bediensprache der Bedienvorrichtung in die von ihm gerade gesprochenen Sprache ändern möchte. Hiermit entfällt eine Navigation durch ein Bedienmenü zum Umstellen der Sprache. Außerdem bleibt dem Benutzer auch die Möglichkeit offen, in der ursprünglichen Bediensprache zu bleiben.

Das erfindungsgemäße Verfahrens dient zum Betreiben eines Kraftfahrzeugs, das eine Bedienvorrichtung aufweist, die in einem ersten Betriebsmodus dazu eingerichtet ist, in einer ersten, voreingestellten Bediensprache benutzt zu werden, und die in einem zweiten Betriebsmodus dazu eingerichtet ist, in einer zweiten Bediensprache benutzt zu werden. Mit anderen Worten ist in dem ersten Betriebsmodus eine erste Bediensprache vorgegeben, und in dem zweiten Bedienmodus ist eine zweite Bediensprache vorgegeben, die sich vorzugsweise von der ersten Bediensprache unterscheiden kann.

In dem ersten Betriebsmodus erfasst beziehungsweise erkennt eine Spracherkennungs- und Sprachbestimmungseinrichtung der Bedienvorrichtung eine Spracheingabe des Benutzers des Kraftfahrzeugs, und stellt fest, dass der Benutzer etwas gesagt hat. Als Spracherkennungs- und Sprachbestimmungseinrichtung wird dabei eine Gerätekomponente oder ein Bauteil der Bedienvorrichtung angesehen, die oder das dazu eingerichtet ist, eine Spracheingabe des Benutzers zu erfassen und zu erkennen, d.h. eine Spracherkennung durchzuführen, und um zu bestimmen, in welcher Sprache die Spracheingabe getätigt wurde. Eine Spracheingabe ist dabei eine verbale Äußerung des Benutzers, zum Beispiel ein gesprochenes Wort oder eine gesprochene Wortfolge.

Die aktivierte Spracherkennungs- und Sprachbestimmungseinrichtung prüft, ob die Sprache der erfassten oder erkannten Spracheingabe der ersten Bediensprache entspricht. In Abhängigkeit von einem Ergebnis des Prüfvorganges erfolgt ein Zuordnen eines Konfidenzwertes zu der Spracheingabe, wobei der Konfidenzwert eine Wahrscheinlichkeit beschreibt, mit der die Sprache der Spracheingabe die zweite die Sprache ist. Kommt die Spracherkennungs- und Sprachbestimmungseinrichtung also zu dem Ergebnis, dass die Sprache der Spracheingabe nicht die erste Bediensprache ist, kann der Spracheingabe ein Konfidenzwert zugeordnet werden, der beschreibt, das die Sprache der Spracheingabe hoher Wahrscheinlichkeit beispielsweise die zweite Bediensprache sein kann.

In Abhängigkeit von dem zugeordneten Konfidenzwert erzeugt die Spracherkennungs- und Sprachbestimmungseinrichtung eine Rüchfragesignal, dass eine in der zweiten Bediensprache verständliche Aufforderung an den Benutzer zum Angeben des einzustellenden Betriebsmodus und/oder der einzustellenden Bediensprache beschreibt. Beispielsweise kann das Rüchfragesignal ein Audiosignal sein, dass eine Sprachausgabe in der zweiten Bediensprache beschreiben kann, in der der Benutzer gefragt wird, ob er die Bedienvorrichtung in der zweiten Bediensprache benutzen möchte. Alternativ kann das Rüchfragesignal zum Beispiel ein Bildsignal sein, das einen entsprechenden Text in der zweiten Bediensprache oder eine Bilder Sprache beschreiben kann, beispielsweise ein Bild einer der zweiten Bediensprache entsprechenden Landesflagge gefolgt von einem Bild eines Fragezeichens.

Die Spracherkennungs- und Sprachbestimmungseinrichtung überträgt das Rüchfragesignal beispielsweise an eine Ausgabeeinrichtung des Kraftfahrzeugs, also an ein Gerät oder eine Gerätekomponente zum Ausgeben von Audio-und/oder Bildsignalen. Die Ausgabeeinrichtung kann beispielsweise als Bildschirm und/oder Lautsprecher ausgestaltet sein.

Es folgt ein Empfangen eines Bediensignals durch die Spracherkennungs-und Sprachbestimmungseinrichtung, wobei das Bediensignal eine durch die Bedienvorrichtung erfasste Bedienhandlung des Benutzers zum Angeben der einzustellenden Bediensprache und/oder des einzustellenden Betriebsmodus beschreibt. Die Bedienhandlung kann beispielsweise von einem Bedienelement erfasst werden, beispielsweise von einem berührungssensitiven Bildschirm, und kann beispielsweise beschreiben, dass der Benutzer gerne die zweite Bediensprache nutzen möchte.

In Abhängigkeit von dem empfangenen Bediensignal erfolgt ein Einstellen der einzustellenden Bediensprache und/oder des einzustellenden Betriebsmodus. Mit anderen Worten wird in Abhängigkeit von dem empfangenen Bediensignal die gewünschte Bediensprache eingestellt.

Durch das erfindungsgemäße Verfahren erfolgt eine einfache und schnelle Umstellung der Bediensprache. Das Umstellen der Bediensprache kann trotz der in dem ersten Bedienmodus verwendete, unter Umständen unbekannte Sprache erfolgen. Durch die schnellere Umstellung der Bediensprache wird Zeit gespart, was es dem Benutzer ermöglicht, sich schneller wieder voll und ganz auf das Fahrgeschehen zu konzentrieren. Durch die Zeitersparnis wird, zum Beispiel bevor der Benutzer losfahren kann, ein längeres Laufen des Motors auf zum Beispiel einem Parkplatz reduziert und damit Strom gespart. Alternativ, stellt der Benutzer die Sprache ein, falls er schon fährt, kann er die Bedienvorrichtung sehr schnell nutzen und fährt zum Beispiel nicht zuerst minutenlang in eine falsche Richtung, weil er die Bediensprache des Navigationsgeräts zunächst nicht versteht. Ebenfalls können unsinnige Dialoge vorgebeugt werden oder diese werden vermieden, so dass solche unsinnigen Dialoge mit beispielsweise verwirrenden und/oder ungewollten Systemvorstellungen reduziert werden.

Bei dem Rüchfragesignal kann es sich gemäß einer weiteren Ausführungsform des erfindungsgemäßen Verfahrens um ein Audiosignal und/oder ein Bildsignal handelt, mit anderen Worten kann die in der zweiten Bediensprache verständliche Aufforderung eine Audionachricht und/oder Textnachricht in der zweiten Bediensprache sein und/oder eine Bildnachricht. Insbesondere bei der Option der Bildnachricht wird die Rückfrage nach der Bestätigung des Einstellens der zweiten Bediensprache allgemein verständlich ausgedrückt. Versteht der Benutzer die zweite Bediensprache und beschreibt das Rüchfragesignal eine Audio- und/oder Textnachricht, so wird er direkt in seiner gewünschten Sprache angesprochen.

Damit der Benutzer das Bestätigen oder Angeben des einzustellenden Betriebsmodus und/oder der einzustellenden, gewünschten Bediensprache noch schneller durchführen kann und den Blick nicht von dem Fahrgeschehen abwenden muss, kann gemäß einer bevorzugten Ausführungsform vorgesehen sein, dass die Spracherkennungs- und Sprachbestimmungseinrichtung zum Erfassen der Bedienhandlung den zweiten Betriebsmodus einstellt. Erwartet also beispielsweise die Bedienvorrichtung aufgrund des Konfidenzwerts, dass der Benutzer den zweiten Betriebsmodus und/oder die zweite Bediensprache eingestellt haben möchte, wird dem Benutzer so ermöglicht, mit einer Spracheingabe auf die Aufforderung des Rückmeldesignals zu antworten.

Gemäß einer weiteren Ausführungsform kann vorgesehen sein, dass durch die Spracherkennungs- und Sprachbestimmungseinrichtung ein Erzeugen eines Wiedergabesignals erfolgen kann, das eine Wiedergabe der erkannten Spracheingabe beschreiben kann. Das Wiedergabesignal kann dann von der Spracherkennungs- und Sprachbestimmungseinrichtung an die Ausgabeeinrichtung übertragen werden. Das von dem Benutzer Gesprochene kann also beispielsweise noch einmal durch die Bedienvorrichtung akustisch ausgegeben oder zum Beispiel auf einem Bildschirm angezeigt werden. In Abhängigkeit von einem Bestätigungssignal, dass die korrekte Wiedergabe der erkannte Spracheingabe beschreiben kann, erfolgt ein Feststellen, dass die Spracheingabe korrekt erkannt wurde. Das Bestätigungssignal kann dabei beispielsweise in Abhängigkeit von einer weiteren Bedienhandlung des Benutzers erzeugt werden. Hierdurch kann eine Fehlbedienung oder einer fehlerhaften Spracherkennung vorgebeugt werden oder die Anzahl der Fehlbedienungen deutlich reduziert werden.

Ermittelt die Spracherkennungs- und Sprachbestimmungseinrichtung eine Häufigkeit, mit der die Spracherkennungs- und Sprachbestimmungseinrichtung in einem vorgegebenen Zeitraum eine Spracheingabe korrekt erkennt, erfolgt das Durchführen der die Spracherkennungs- und Sprachbestimmungseinrichtung betreffenden Verfahrensschritte des Verfahrens nach einem der vorhergehenden Ausführungsformen in Abhängigkeit von der ermittelten Häufigkeit. Hierzu kann beispielsweise von der Spracherkennungs- und Sprachbestimmungseinrichtung gezählt werden, wie oft der Benutzer das von dem Wiedergabesignal Wiedergegebene bestätigt, d.h. bestätigt, dass die Spracheingabe korrekt verstanden wurde. Hierdurch kann die Bedienvorrichtung "lernen", ob der Benutzer die jeweilige Bediensprache gute versteht unter das erfindungsgemäße Verfahren kann dann beispielsweise nur dann durchgeführt werden, wenn noch keine Ergebnisse oder wenig Ergebnisse vorliegen, ob der Benutzer die erste Bediensprache und/oder die zweite Bediensprache versteht.

Die oben gestellte Aufgabe wird ebenfalls gelöst durch eine erfindungsgemäße Bedienvorrichtung. Die Bedienvorrichtung weist eine Spracherkennungs- und Sprachbestimmungseinrichtung auf, die dazu eingerichtet ist, die Verfahrensschritte gemäß einer Ausführungsform des erfindungsgemäßen Verfahrens durchzuführen. Die Spracherkennungs- und Sprachbestimmungseinrichtung kann hierzu zumindest einen Mikroprozessor und/oder zumindest einen Mikrocontroller aufweisen. Des Weiteren kann die Spracherkennungs- und Sprachbestimmungseinrichtung einen Programmcode aufweisen, der dazu eingerichtet ist, bei Ausführen durch die Spracherkennungs- und Sprachbestimmungseinrichtung die Ausführungsform des erfindungsgemäßen Verfahrens durchzuführen. Der Programmcode kann in einem Datenspeicher der Spracherkennungs- und Sprachbestimmungseinrichtung gespeichert sein.

Die oben gestellte Aufgabe wird ebenfalls gelöst durch ein erfindungsgemäßes Kraftfahrzeug, das beispielsweise als Kraftwagen ausgestaltet sein kann, vorzugsweise als Personenkraftwagen. Das erfindungsgemäße Kraftfahrzeug ist gekennzeichnet durch eine Ausführungsform der erfindungsgemäßen Bedienvorrichtung. Auch hier ergeben sich die oben genannten Vorteile.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden sind Ausführungsbeispiele der Erfindung beschrieben. Hierzu zeigt:
- Fig. 1: eine schematische Darstellung zu einer Ausführungsform des erfindungsgemäßen Verfahrens, und
- Fig. 2: eine schematische Darstellung zu einer weiteren Ausführungsform des erfindungsgemäßen Verfahrens.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

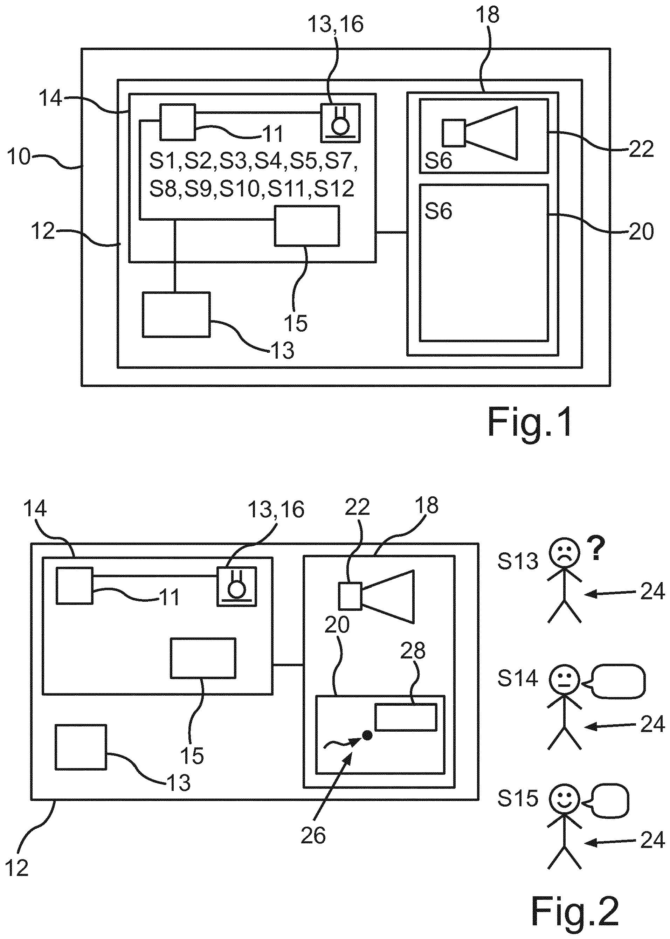

Die Figur 1 erläutert das Prinzip des erfindungsgemäßen Verfahrens exemplarisch anhand eines ersten Ausführungsbeispiels.

Hierzu zeigt die Figur 1 schematisch ein Kraftfahrzeug 10, dass beispielsweise als Kraftwagen, vorzugsweise als Personenkraftwagen ausgestaltet sein kann. Das Kraftfahrzeug 10 weist eine Bedienvorrichtung 12 auf, beispielsweise ein Infotainmentsystem des Kraftfahrzeugs 10 oder ein Multimedia-Interface. Die Bedienvorrichtung 12 kann beispielsweise ein Bedienelement 13 aufweisen, das beispielsweise als Taster oder Drehstelle ausgestattet sein kann. Alternativ kann das Bedienelement 13 auch als berührungssensitiver Bildschirm ausgestaltet sein kann. Die Bedienvorrichtung 12 der Fig. 1 zeigt ebenfalls eine Spracherkennung- und Sprachbestimmungseinrichtung 14, die zum Beispiel einen Mikroprozessor 11 und/oder einen Mikrokontroller aufweisen kann. Die Spracherkennung- und Sprachbestimmungseinrichtung kann zum Beispiel als Steuerplatine ausgestaltet sein, und optional einen Datenspeicher 15 aufweisen. Der Datenspeicher 15 kann beispielsweise als Steuerchip ausgestaltet sein. Die Fig. 1 zeigt dabei eine beispielhafte Architektur der Spracherkennung- und Sprachbestimmungseinrichtung 14. In einer alternativen Architektur kann der Datenspeicher 15 beispielsweise einen Bestandteil des Mikroprozessors 11 sein. Auf dem Datenspeicher kann ein Programmcode abgelegt sein, der dazu eingerichtet ist, bei Ausführen durch die Spracherkennung- und Sprachbestimmungseinrichtung eine Ausführungsform des erfindungsgemäßen Verfahrens durchzuführen.

Die Spracherkennung- und Sprachbestimmungseinrichtung 14 weist ebenfalls ein Mikrofon 16 auf, das als der Fachmann aus dem Stand der Technik bekannt Mikrofon zum Aufnehmen einer Spracheingabe eines Benutzers des Kraftfahrzeugs 10 eingerichtet sein kann.

Die einzelnen Komponenten der Spracherkennung- und Sprachbestimmungseinrichtung 14 können über eine geeignete Datenkommunikationsverbindung miteinander verbunden sein, die in der Fig. 1 (und in der Figur 2) als schwarze Verbindungslinien dargestellt sind. Dabei sind jedoch zusätzliche und/oder alternative Datenkommunikationsverbindung möglich, die in der jeweiligen Figur nicht gezeigt sind. Durch den beispielhaften Programmcode kann die Spracherkennung- und Sprachbestimmungseinrichtung in mindestens zwei oder mehr als zwei Betriebsmodi betrieben werden. Dabei unterscheiden sich die Betriebsmodi in einer entsprechenden Bediensprache.

Die Bedienvorrichtung 12 weist ebenfalls eine Ausgabeeinrichtung 18 auf, die beispielsweise als Bildschirm und/oder Lautsprecher ausgestaltet sein kann. Handelt es sich bei der Ausgabeeinrichtung 18 um berührungssensitive Bildschirm, so kann das Bedienelement 13 in die Ausgabeeinrichtung 18 integriert sein. Vorzugsweise umfasst die Ausgabeeinrichtung 18 sowohl einen Bildschirm 20, als auch einen Lautsprecher 22.

Das Kraftfahrzeug 10 kann beispielsweise ein Mietwagen sein, das von einem Benutzer gemietet wird. Der Benutzer kann dabei beispielsweise ein Urlauber aus Deutschland sein, der das Kraftfahrzeug 10 in einem arabischen Land mietet. In einer Grundeinstellung kann ein erster Betriebsmodus eingestellt sein, in dem die Bediensprache beispielsweise Arabisch sein kann.

Die Bedienvorrichtung 12 kann beispielsweise dazu eingerichtet sein, ein Navigationssystem und/oder mehrere Komfortsysteme des Kraftfahrzeugs 10 in Abhängigkeit von Bedienhandlung des Benutzers zu betreiben. Bei Erfassen einer Spracheingabe kann das beispielhafte Mikrofon ein Bediensignal erzeugen, dass die Spracheingabe beschreiben kann, und das Bediensignal kann beispielsweise an den Mikroprozessor 11 übertragen werden. Dieser kann beispielsweise bei Empfangen des Bediensignals die erfasste Spracheingabe als solche erkennen (Verfahrensschritt S1).

Im Beispiel der Figur 1 kann zum Beispiel bei Aktivieren einer Stromversorgung des Kraftfahrzeugs 10 beispielsweise ein Begrüßungstext oder eine Frage, wohin der Benutzers das Kraftfahrzeug 10 navigiert haben möchte, durch den beispielhaften Lautsprecher 42 ausgegeben werden. Da im Beispiel der Fig. 1 der erste Betriebsmodus eingestellt ist, kann eine solche Anzeige oder eine solche Sprachausgabe in Arabisch.

Im Beispiel kann der Benutzer beispielsweise der arabischen Sprache nicht ausreichend mächtig sein, um den beispielhaften Begrüßungstext oder die beispielhafte Frage zu verstehen. Aufgrund der Sprachbarriere kann der Benutzer jedoch nicht einen entsprechenden, arabischen Bedienbefehl geben, oder durch ein Bedienmenü navigieren, um die Bediensprache manuell einzustellen.

Als Spracheingabe kann er deswegen einfach einen beliebigen Satz, eine beliebige Wortfolge oder ein beliebiges Wort in zum Beispiel seiner Muttersprache sagen. Diese Spracheingabe wird von der Spracherkennung- und Sprachbestimmungseinrichtung 14 erkannt (S1).

Beispielsweise kann hierzu der Benutzer einen vorgegebenen, standardisierten Satz sprechen. Der Mechanismus zum Überprüfen, ob die Sprache der Spracheingabe der ersten Bediensprache entspricht (S2), kann beispielsweise aktiv von dem Benutzer vor dem Tätigen der Spracheingabe aktiviert werden, beispielsweise durch Bedienen des Bedienelements 13. Alternativ kann jedoch vorgesehen sein, dass das erfindungsgemäße Verfahren routinemäßig durchlaufen werden kann, oder davon abhängen kann, ob der Benutzer bereits erfolgreiche Spracheingaben getätigt hat. Im Beispiel der Fig. 1 kann dies jedoch nicht der Fall sein, da der Benutzer beispielsweise zum ersten Mal dieses Kraftfahrzeug 10 benutzt.

Für den Prüfvorgang S2 kann beispielsweise vorgesehen sein, dass in zum Beispiel dem Datenspeicher 15 ein Schwellenwert vorgegeben sein kann, der zum Beispiel angeben kann, welcher minimale Prozentsatz der Spracheingabe in der ersten Bediensprache sein soll, damit die erste Bediensprache als erkannt gilt. Dies kann beispielsweise dann hilfreich sein, wenn der Benutzer zwar die erste Bediensprache spricht, jedoch beim Sprechen der Bediensprache Fremdwörter benutzt.

Im Beispiel der Fig. 1 erkennt die Spracherkennung- und Sprachbestimmungseinrichtung 14 beispielsweise, dass der Benutzer die Spracheingabe nicht in Arabisch getätigt hat. In Abhängigkeit von dem Ergebnis dieses Prüfvorganges S2 kann Spracherkennung- und Sprachbestimmungseinrichtung 14 im Verfahrensschritt S3 der Spracheingabe einen Konfidenzwert zuweisen oder zuordnen, wobei der Konfidenzwert beispielsweise angeben kann, dass es sich bei der Spracheingabe mit beispielsweise einer Wahrscheinlichkeit von 90 % um die zweite Bediensprache handelt.

Optional kann an dieser Stelle vorgesehen sein, dass die Spracherkennung-und Sprachbestimmungseinrichtung 14 beispielsweise ein Wiedergabesignal erzeugen kann, dass beispielsweise den erkannten Satz, den der Benutzer als Spracheingabe gesprochen hat, beschreiben kann (S4), und kann dieses Wiedergabesignal beispielsweise die Ausgabeeinrichtung 18 übertragen (S5). Die Ausgabeeinrichtung 18 kann beispielsweise dieses Wiedergabesignal über den beispielhaften Bildschirm 20 ausgeben (S6), oder beispielsweise über den beispielhaften Lautsprecher 22. Daran kann der Benutzerkonto kontrollieren, ob die Spracheingabe richtig erkannt wurde. Ein korrektes Erkennen kann der Benutzer beispielsweise durch eine weitere Spracheingabe in der zweiten Bediensprache oder zum Beispiel über ein Betätigen des Bedienelements 13 bestätigen. Anhand einer solchen erfassten Bedienhandlung kann beispielsweise das Bedienelement 13 oder eine andere Komponente der Bedienvorrichtung 12 eine Bestätigungssignal erzeugen, dass die korrekte Wiedergabe der erkannten Spracheingabe beschreiben kann. In Abhängigkeit von einem solchen Bestätigungssignal kann die Spracherkennung- und Sprachbestimmungseinrichtung feststellen, dass Spracheingabe die korrekt erkannt wurde (S7).

In Abhängigkeit von dem zugeordneten Konfidenzwert kann die Spracherkennung- und Sprachbestimmungseinrichtung ein Rückfragesignal erzeugen, dass eine in der zweiten Bediensprache verständliche Aufforderung an den Benutzer zum angeben des Betriebsmodus und/oder der gewünschten Bediensprache beschreiben kann, beispielsweise, auf Deutsch, "möchten Sie Deutsch als Bediensprache einstellen?", oder eine Bildsequenz, beispielsweise die deutsche Landesflagge gefolgt von einem Fragezeichen (S8). Das Rückfragesignal kann dann an die Ausgabeeinrichtung 18 übertragen werden (S5), und diese kann das Rückfragesignal ausgeben (S6).

Der Benutzer des Beispiels der Fig. 1 kann dies beispielsweise so wünschen, und eine entsprechende Spracheingabe tätigen, oder, alternativ, durch das Bedienelement 13 betätigen. Das im Verfahrensschritt S9 empfangene Bediensignal kann die gewünschte Bediensprache und/oder Bestätigung beschreiben, und in Abhängigkeit von dem empfangenen Bediensignal an die Spracherkennung- und Sprachbestimmungseinrichtung den zweiten Betriebsmodus einstellen (S10).

Handelt es sich bei dem Benutzer beispielsweise einen deutschen Urlauber, von dem die Spracherkennung- und Sprachbestimmungseinrichtung 14 eine Spracheingabe empfangen hat, beispielsweise einen Satz, den der Urlauber gerade an einen Beifahrer in seiner Muttersprache gerichtet hat, spricht der Benutzer jedoch zusätzlich Arabisch und möchte, um seine Arabischkenntnisse während des Urlaubs zu trainieren, die Bedienvorrichtung 12 während der Nutzung des Kraftfahrzeugs 10 weiterhin in der ersten Bediensprache benutzen, so kann er dies durch eine entsprechende Bedienhandlung ausdrücken und die Bedienvorrichtung 12 kann weiterhin in dem ersten Betriebsmodus betrieben werden.

In Abhängigkeit von dem Konfidenzwert kann optional vorgesehen sein, dass der zweite Bedienmodus bereits zum Erfassen der Bedienhandlung eingestellt werden kann (S10). Hierdurch kann die Spracherkennung- und Sprachbestimmungseinrichtung eine entsprechende Spracheingabe des Benutzers in seiner gewünschten Sprache erkennen (S1).

Während der oben beschriebenen Verfahrensschritte kann der Benutzer beispielsweise schon mit dem Kraftfahrzeug 10 losgefahren sein. Dadurch, dass er der seine Aufmerksamkeit nicht auf zum Beispiel ein Bedienmenü zum Einstellen der Bediensprache richten muss und nicht auf den beispielhaften Bildschirm 20 schauen muss, ergibt sich für ihn eine wertvolle Zeitersparnis, sodass er beispielsweise bei einem Bedürfnis, das Navigationssystem zu benutzen, dieses sofort zur Verfügung gestellt bekommt. Er muss also nicht beispielsweise erst mal eine Weile auf dem Parkplatz stehen, um die Bediensprache einzustellen. Ist das Kraftfahrzeug 10 ein Elektro Kraftfahrzeug, so ergibt sich für ihn auch eine Stromersparnis, weil er beispielsweise nicht minutenlang mit laufendem Motor steht ohne loszufahren.

Während des Betriebs des Kraftfahrzeugs 10 kann beispielsweise vorgesehen sein, dass jede Spracheingabe des Benutzers durch ein entsprechendes Wiedergabesignal, wie bereits oben beschrieben, noch einmal zum Beispiel angezeigt werden kann (S6). Es kann vorgesehen sein, dass zum Betreiben des beispielhafte Navigationssystems oder der Klimaanlage jeweils eine Bestätigung des Benutzers verlangt werden kann, und die jeweiligen Bestätigungssignale, die das korrekte Erkennen der Spracheingabe (S1) beschreiben können, können von der Spracherkennung- und Sprachbestimmungseinrichtung 14 zum Beispiel gezählt werden (S11). Hierdurch kann eine Häufigkeit ermittelt werden (S12), und die Spracherkennung- und Sprachbestimmungseinrichtung 14 beispielsweise erkennen, dass alle Spracheingaben korrekt erkannt wurden.

Hat der Benutzer alternativ die Bedienvorrichtung 12 beispielsweise in der ersten Bediensprache benutzt, und ist jedoch beispielsweise seine Aussprache noch nicht gut genug, so kann die Spracherkennung- und Sprachbestimmungseinrichtung 14 beispielsweise feststellen oder ermitteln, dass seine Spracheingaben zum Beispiel nur zu 80 % richtig erkannt wurden (S1). In der Spracherkennung- und Sprachbestimmungseinrichtung 14 kann dann beispielsweise ein Schwellenwert abgelegt sein, der beispielsweise beschreiben kann, dass bei einer Häufigkeit von unter 90 % der erkannten Spracheingaben die Verfahrensschritte des erfindungsgemäßen Verfahrens durchgeführt werden, d.h. zum Beispiel nach einer vorgegebenen Anzahl nicht korrekt erkannter Spracheingaben kann beispielsweise erneut geprüft werden (S4) und/oder abgefragt werden, ob der Benutzer nicht doch in eine andere Bediensprache wechseln möchte. Ein solcher Schwellenwert kann beispielsweise angehoben werden, wenn sich die ermittelte Häufigkeit beispielsweise im Laufe einer Fahrt ändert.

Die Fig. 2 zeigt ein weiteres Ausführungsbeispiel des erfindungsgemäßen Verfahrens, wobei im Folgenden nur noch auf Unterschiede oder Besonderheiten zu dem Beispiel der Fig. 1 eingegangen wird. Die Bedienvorrichtung 12 kann dabei beispielsweise mittels der Ausgabeeinrichtung 18 ein Bild 26 zu einem eingestellten Navigationsprogramm anzeigen, sowie ein optionales Textfeld 28, auf dem beispielsweise eine Information zu beispielsweise einem Navigationsziel angezeigt werden kann. Im Beispiel der Fig. 2 kann diese Information beispielsweise in arabischen Schriftzeichen angegeben sein, die der Benutzer 24 nicht lesen kann und deswegen nicht weiß, was die Textnachricht im mitteilen möchte (S13). Im Verfahrensschritt S14 kann er beispielsweise einen beliebigen Satz sagen, beispielsweise "bitte nach Berlin fahren" (S14). Die Spracheingabe ist dabei als Sprechblase gezeigt. In dem Beispiel der Figur 2 kann der Benutzer 24 also beispielsweise das Kraftfahrzeug 10 in Deutschland mieten, wobei beispielsweise ein vorheriger Fahrer des Kraftfahrzeugs 10 einen Betriebsmodus eingestellt hatte, in dem die Bediensprache Arabisch ist.

Durch das erfindungsgemäße Verfahren, beispielsweise wie oben zur Fig. 1 beschrieben, kann die Spracherkennung- und Sprachbestimmungseinrichtung 14 beispielsweise einen Bedienmodus einstellen (S10), in dem in die Bediensprache Deutsch ist. Dabei sind in der Fig. 2, der besseren Übersicht wegen, die einzelnen Verfahrensschritte nicht noch einmal aufgeführt. In S15 ist gezeigt, dass der Benutzer 24 die eingestellte Bediensprache nun versteht und die Bedienvorrichtung 12 nutzen kann.

Insgesamt zeigen die Ausführungsbeispiele, wie durch die Erfindung ein Wechsel einer Sprache durch Erkennen der Fahrersprache ermöglicht wird.

Gemäß einem weiteren Ausführungsbeispiel kann im Kraftfahrzeug 10 ein Programmcode implementiert werden, beispielsweise ein Algorithmus, womit die Sprache des Benutzers 24 erkannt werden kann. Entspricht die Sprache des Benutzers 24 nicht der eingestellten Bediensprache, kann zum Beispiel gefragt werden, zum Beispiel durch Ausgeben des oben beschriebenen Rückfragesignals in der zweiten Bediensprache, ob auf die erkannte Sprache geschaltet werden soll (zum Beispiel durch Anzeigen eines entsprechenden Textes mit der Rückfrage "möchten Sie auf Deutsch umschalten?"). Die zu erkennende Spracheingabe ist dabei beispielsweise ein Satz mit einer minimalen, vorgegebenen Anzahl an Wörtern und/oder einer minimalen Sprechdauer oder Zeit der Spracheingabe.

Der beispielhafte Algorithmus kann zum Beispiel nur bei Bedarf aktiviert werden, sodass im Normalfall keine Nachteile oder Rechenzeiten entstehen.

Sobald das Erkennen der Spracheingabe (S1) in der eingestellten Bediensprache sehr schlecht ist und nur sehr geringe Erkennungswahrscheinlichkeiten berechnet werden, also ein geringer Konfidenzwert zugeordnet wird (S3), kann der Algorithmus gestartet werden. Eine Schwelle der Wahrscheinlichkeit kann im Laufe einer Fahrt mit bereits erfolgreich durchgeführten Spracheingaben angehoben werden. Wenn der Benutzer 24 zum Beispiel bereits erfolgreich in der eingestellten Bediensprache Eingaben getätigt hat, dann kann zum Beispiel davon ausgegangen werden, dass der Benutzer 24 die eingestellte Bediensprache beherrscht und mit zum Beispiel "bitte Sprache auf Arabisch umschalten" als Spracheingabe direkt umschalten kann.

Gemäß einem weiteren Ausführungsbeispiel kann die gesprochene Eingabe zwischengespeichert werden. Sagt der Benutzer 24 beispielsweise im arabischen Bedienmodus: "bitte nach München navigieren", kann beispielsweise folgender Ablauf durchgeführt werden: eine Erkennung eines arabischen Satzes kann fehlschlagen (S1), der beispielhafte Spracherkennung-Algorithmus kann gestartet werden, der Algorithmus kann Deutsch als große Wahrscheinlichkeit erkennen, es kann ein Rückfragesignal der Frage "möchten Sie auf Deutsch umschalten?" ausgegeben werden (S6), mithilfe einer Antwort "ja" kann auf die Bediensprache Deutsch umgeschaltet werden. Bei einer Antwort "Nein" kann beispielsweise ein Bedienmenü folgende Menüpunkte oder Funktionen ausgeben (S6): 1 - auf Deutsch wechseln, 2 - Englisch (auf Englisch, wenn beispielsweise Englisch die nächste Wahrscheinlichkeit hat), 3 - Arabisch beibehalten (zum Beispiel in arabischer Schrift). In der nun gewählten Sprache kann der vorherige gespeicherte Satz "bitte nach München navigieren" ausgewertet werden.

Vorteilhaft ergibt sich dadurch eine einfache Umstellung der Sprache. Eine Umstellung der Bediensprache kann trotz unbekannter Sprache erfolgen. Es erfolgt eine schnellere Umstellung der Bediensprache, und es wird Zeit gespart, was insbesondere für Elektrokraftfahrzeuge 10 relevant sein kann. Das Problem, dass ein Benutzer 24 mit einer unbekannten Bediensprache zurechtkommen und fahren musste, wird reduziert oder ganz vermieden. So können unsinnige Dialoge reduziert oder vermieden werden, die zu verwirrenden und ungewollten Systemvorstellungen führen können, beispielsweise wenn der Benutzer 24 "nach Amberg navigieren" sagt, das zum Beispiel mit "the radio is changed to AM" verwechselt werden könnte.

## Patentansprüche

1. Verfahren zum Betreiben eines Kraftfahrzeugs (10), das eine Bedienvorrichtung (12) aufweist, die in einem ersten Betriebsmodus dazu eingerichtet ist, in einer ersten, voreingestellten Bediensprache benutzt zu werden, und die in einem zweiten Betriebsmodus dazu eingerichtet ist, in einer zweiten Bediensprache benutzt zu werden,
das Verfahren aufweisend die durch eine aktivierte Spracherkennungs-und Sprachbestimmungseinrichtung (14) durchgeführten Schritte:
- in dem ersten Betriebsmodus Erkennen einer Spracheingabe eines Benutzers (24) des Kraftfahrzeugs (10, S1),
- Prüfen, ob eine Sprache der Spracheingabe der ersten Bediensprache entspricht (S2), und
- in Abhängigkeit von einem Ergebnis des Prüfvorganges Zuordnen eines Konfidenzwertes zu der Spracheingabe (S3), wobei der Konfidenzwert eine Wahrscheinlichkeit beschreibt, mit der die Sprache der Spracheingabe die zweite Bediensprache ist,
das Verfahren **gekennzeichnet durch** die folgenden, durch die Spracherkennungs- und Sprachbestimmungseinrichtung (14) durchgeführten Schritte:
- in Abhängigkeit von dem zugeordneten Konfidenzwert Erzeugen eines Rückfragesignals (S8), das eine in der zweiten Bediensprache verständliche Aufforderung an den Benutzer (24) zum Angeben des einzustellenden Betriebsmodus und/oder der einzustellenden Bediensprache beschreibt;
- Übertragen des Rückfragesignals (S5) an eine Ausgabeeinrichtung (18) zum Ausgeben des Rückfragesignals (S6),
- Empfangen eines Bediensignals, das eine durch die Bedienvorrichtung erfasste Bedienhandlung des Benutzers (24) zum Angeben einer gewünschten Bediensprache beschreibt (S9),
- in Abhängigkeit von dem empfangenen Bediensignal Einstellen des einzustellenden Betriebsmodus und/oder der einzustellenden Bediensprache (S10), und
- Ermitteln einer Häufigkeit (S12), mit der die Spracherkennungs- und Sprachbestimmungseinrichtung (14) in einem vorgegebenen Zeitraum eine Spracheingabe korrekt erkennt (S1), wobei das Durchführen des Verfahrens in Abhängigkeit von der ermittelten Häufigkeit erfolgt.

2. Verfahren nach Anspruch 1,
wobei die in der zweiten Bediensprache verständliche Aufforderung eine Audionachricht und/oder Textnachricht in der zweiten Bediensprache ist, und/oder eine Bildnachricht.

3. Verfahren nach einem der vorhergehenden Ansprüche, aufweisend den durch die Spracherkennungs- und Sprachbestimmungseinrichtung (14) durchgeführten Schritt:
- Einstellen des zweiten Bedienmodus zum Erfassen der Bedienhandlung (S10).

4. Verfahren nach einem der vorhergehenden Ansprüche, aufweisend die durch die Spracherkennungs- und Sprachbestimmungseinrichtung (14) durchgeführten Schritte:
- Erzeugen eines Wiedergabesignals, das eine Wiedergabe der erkannten Spracheingabe beschreibt (S4),
- Übertragen des Wiedergabesignals an die Ausgabeeinrichtung (18, S5),
- in Abhängigkeit von einem Bestätigungssignal, das die korrekte Wiedergabe der erkannten Spracheingabe beschreibt, Feststellen, dass die Spracheingabe korrekt erkannt wurde (S7).

5. Bedienvorrichtung (12), **gekennzeichnet durch** eine Spracherkennungs-und Sprachbestimmungseinrichtung (14), wobei die Spracherkennungs-und Sprachbestimmungseinrichtung dazu eingerichtet ist, die Verfahrensschritte eines Verfahrens nach einem der Ansprüche 1 bis 4 durchzuführen.

6. Bedienvorrichtung nach Anspruch 5, wobei die Spracherkennungs- und Sprachbestimmungseinrichtung zumindest einen Mikroprozessor (11) und/oder zumindest einen Mikrocontroller aufweist; und wobei die Spracherkennungs- und Sprachbestimmungseinrichtung einen Datenspeicher (15) mit einen Programmcode aufweist, wobei der Programmcode dazu eingerichtet ist, bei Ausführen durch die Spracherkennungs-und Sprachbestimmungseinrichtung eine Ausführungsform eines Verfahrens gemäß einem der Ansprüche 1 bis 4 durchzuführen.

7. Kraftfahrzeug (10), **gekennzeichnet durch** eine Bedienvorrichtung (12) nach Anspruch 5 oder 6.

## Claims

1. Method for operating a motor vehicle (10), which has an operating device (12), which in a first operational mode is configured to be used in a first, previously set operational language, and which in a second operational mode is configured to be used in a second operational language,
the method having the steps carried out by an activated speech recognition and language determining means (14):
- in the first operational mode, recognising a speech input of a user (24) of the motor-vehicle (10, S1),
- checking whether a language of the speech input is equal to the first operational language (S2), and
- depending on a result of the checking procedure, assigning a confidence value to the speech input (S3), wherein the confidence value describes a probability with which the language of the speech input is the second operational language,
the method **characterised by** the following steps carried out by the speech recognition and language determining means (14):
- depending on the assigned confidence value, generating a query signal (S8) which describes a prompt, understandable in the second operational language, to the user (24) to enter the operational mode to be set and/or the operational language to be set;
- transmitting the query signal (S5) to an output means (18) for outputting the query signal (S6),
- receiving an operating signal, which describes an operating action of the user (24) detected by the operational device for entering a desired operational language (S9),
- depending on the received operating signal, setting the operational mode to be set and/or the operational language to be set (S10), and
- determining a frequency (S12) with which the speech recognition and language determining means (14) in a predetermined time frame correctly recognises a speech input (S1), wherein the carrying out of the method is carried out depending on the determined frequency.

2. Method according to claim 1,
wherein the prompt understandable in the second operational language is an audio message and/or text message in the second operational language, and/or a picture message.

3. Method according to any of the preceding claims, having the step carried out by the speech recognition and language determining means (14):
- setting the second operational mode for determining the operating action (S10).

4. Method according to any of the preceding claims, having the steps carried out by the speech recognition and language determining means (14):
- generating a reproduction signal which describes a reproduction of the recognised speech input (S4),
- transmitting the reproduction signal to the output means (18, S5),
- depending on a confirmation signal, which describes the correct reproduction of the recognised speech input, determining that the speech input was correctly recognised (S7).

5. Operating device (12) **characterised by** a speech recognition and language determining means (14), wherein the speech recognition and language determining means is configured to carry out the method steps of a method according to any of claims 1 to 4.

6. Operating device according to claim 5, wherein the speech recognition and language determining means has at least one microprocessor (11) and/or at least one microcontroller; and wherein the speech recognition and language determining means has a data storage (15) having a program code, wherein the program code is configured to carry out an embodiment of a method according to any of claims 1 to 4 when executed by the speech recognition and language determining means.

7. Motor vehicle (10) **characterised by** an operating device (12) according to claim 5 or 6.

## Revendications

1. Procédé permettant de faire fonctionner un véhicule automobile (10), qui présente un dispositif de commande (12), qui est conçu dans un premier mode de fonctionnement pour être utilisé dans une première langue de commande préréglée et qui est conçu dans un second mode de fonctionnement pour être utilisé dans une seconde langue de commande,
le procédé présentant les étapes exécutées par un système de reconnaissance vocale et de détermination vocale (14) activé :
- dans le premier mode de fonctionnement, la reconnaissance d'une entrée vocale d'un utilisateur (24) du véhicule automobile (10, S1),
- la vérification si une langue de l'entrée vocale correspond à la première langue de commande (S2), et
- en fonction d'un résultat de l'opération de vérification, l'attribution d'une valeur de confiance à l'entrée vocale (S3), dans lequel la valeur de confiance décrit une vraisemblance selon laquelle la langue de l'entrée vocale est la seconde langue de commande,
le procédé **caractérisé par** les étapes suivantes exécutées par le système de reconnaissance vocale et de détermination vocale (14) :
- en fonction de la valeur de confiance attribuée, la génération d'un signal de requête (S8) qui décrit une demande, compréhensible dans la seconde langue de commande, à l'utilisateur (24) pour l'indication du mode de fonctionnement à régler et/ou de la langue de commande à régler ;
- la transmission du signal de requête (S5) à un système de sortie (18) pour la sortie du signal de requête (S6),
- la réception d'un signal de commande qui décrit une manipulation de commande de l'utilisateur (24) détectée par le dispositif de commande pour l'indication d'une langue de commande souhaitée (S9),
- en fonction du signal de commande reçu, le réglage du mode de fonctionnement à régler et/ou de la langue de commande à régler (S10), et
- la détermination d'une fréquence (S12) avec laquelle le système de reconnaissance vocale et de détermination vocale (14) reconnaît correctement une entrée vocale au cours d'une période de temps prédéfinie (S1), dans lequel l'exécution du procédé a lieu en fonction de la fréquence déterminée.

2. Procédé selon la revendication 1,
dans lequel la demande compréhensible dans la seconde langue de commande est un message audio et/ou un message textuel dans la seconde langue de commande, et/ou un message imagé.

3. Procédé selon l'une quelconque des revendications précédentes, présentant l'étape exécutée par le système de reconnaissance vocale et de détermination vocale (14) :
- le réglage du second mode de fonctionnement pour la détection de la manipulation de commande (S10).

4. Procédé selon l'une quelconque des revendications précédentes, présentant les étapes exécutées par le système de reconnaissance vocale et de détermination vocale (14) :
- la génération d'un signal de reproduction qui décrit une reproduction de l'entrée vocale reconnue (S4),
- la transmission du signal de reproduction au système de sortie (18, S5),
- en fonction d'un signal de confirmation qui décrit la reproduction correcte de l'entrée vocale reconnue, la constatation que l'entrée vocale a été correctement reconnue (S7).

5. Dispositif de commande (12), **caractérisé par** un système de reconnaissance vocale et de détermination vocale (14), dans lequel le système de reconnaissance vocale et de détermination vocale est conçu pour exécuter les étapes de procédé d'un procédé selon l'une quelconque des revendications 1 à 4.

6. Dispositif de commande selon la revendication 5, dans lequel le système de reconnaissance vocale et de détermination vocale présente au moins un microprocesseur (11) et/ou au moins un microcontrôleur ; et dans lequel le système de reconnaissance vocale et de détermination vocale présente une mémoire de données (15) avec un code de programme, dans lequel le code de programme est conçu pour, en cas d'exécution par le système de reconnaissance vocale et de détermination vocale, exécuter un mode de réalisation d'un procédé selon l'une quelconque des revendications 1 à 4.

7. Véhicule automobile (10), **caractérisé par** un dispositif de commande (12) selon la revendication 5 ou 6.
